# EUROPÄISCHE PATENTSCHRIFT

(11) **EP 1 416 815 B1**
(45) Veröffentlichungstag und Bekanntmachung des Hinweises auf die Patenterteilung: **27.02.2008**
(21) Anmeldenummer: 02727290.5
(22) Anmeldetag: 05.04.2002
(51) Int. Cl.: A23N 7/04

(54) **STEUERVORRICHTUNG UND VERFAHREN ZUM SCHÄLEN VON STANGENFÖRMIGEM SCHÄLGUT**
CONTROL DEVICE AND METHOD FOR PEELING AN ELONGATED OBJECT TO BE PEELED
SYSTEME DE COMMANDE ET PROCEDE POUR EPLUCHER UN PRODUIT A EPLUCHER DE FORME ALLONGEE

(30) Priorität: 18.04.2001 DE 10118997
(43) Veröffentlichungstag der Anmeldung: 12.05.2004
(73) Patentinhaber: Hepro GmbH, 33129 Delbrück (DE)
(72) Erfinder: PROTTE, Christoph, 33129 Delbrück (DE)
(74) Vertreter: Ostermann, Thomas
(86) Internationale Anmeldenummer: PCT/DE2002/001251
(87) Internationale Veröffentlichungsnummer: WO 2002/082931

(56) Entgegenhaltungen:
- DE-A- 19 932 966
- DE-U- 9 203 558
- US-A- 4 212 237
- US-A- 4 679 499
- US-A- 5 857 404

## Beschreibung

Die Erfindung betrifft eine Steuervorrichtung zum Schälen von stangenförmigem Schälgut nach dem Oberbegriff des Patentanspruchs 1.

Ferner betrifft die Erfindung ein Verfahren zum Schälen von stangenförmigem Schälgut nach dem Oberbegriff des Patentanspruchs 6.

Aus der DE 92 03 558 U1 ist eine Schälmaschine für Spargel bekannt, bei der ein Paar von Schälmessern schwimmend zueinander jeweils über einen Verstellarm gelagert sind, wobei zwischen den Schälmessern die jeweils zu schälende Spargelstange angeordnet ist. Zum Schälen der Spargelstange werden die Verstellarme unter Anlage der Schälmesser in einem Endbereich derselben mittels einer Steuereinrichtung aus einer die Spargelstange freigebenden Öffnungsposition in eine an der Spargelstange anliegenden Schälposition verbracht. Dabei erfolgt das Anlegen und Schneiden der Spargelstange unter Bildung einer vorgegebenen Schneidandruckkraft.

Es hat sich herausgestellt, dass sich das Beaufschlagen der Spargelstange am Anfang des Schälvorganges mit einer vorgegebenen Schneidandruckkraft des Schälmessers ungünstig auf das Schälergebnis auswirkt. Es bilden sich in dem zu dem Anfang des Schneidvorganges korrespondierenden Bereich der Spargelstange unerwünschte Schneidfurchen bzw. Einschneidungen.

Aus der US 4 679 499 A ist eine Steuervorrichtung zum Schälen von stangenförmigem Schälgut bekannt, die über verschwenkbar gelagerte Schälmesser verfügt. Die Schälmesser sind mittels einer pneumatischen Steuereinrichtung betätigbar. Zum Schälen des Schälgutes wird das Schälmesser unter Bildung einer gegenüber einer später wirkenden Schneidandruckkraft verringerten Anlegekraft in eine Anlegeposition an das Schälgut verbracht. Anschließend erfolgt der Schälvorgang vermittels der vorgegebenen erhöhten Schneidandruckkraft

Aufgabe der vorliegenden Erfindung ist es daher, eine Steuervorrichtung und ein Verfahren zum Schälen von stangenförmigem Schälgut anzugeben, womit ein verbessertes und schonendes Schälergebnis erzielt wird welches einem durch Handschälen erzielten Schälergebnis möglichst nahe kommt.

Zur Lösung dieser Aufgabe weist die erfindungsgemäße Steuervorrichtung die Merkmale des Patentanspruchs 1 auf.

Der besondere Vorteil der Steuervorrichtung besteht darin, dass durch Vorsehen von Steuermitteln das auf den jeweiligen Verstellarm wirkende Verstellelement derart angesteuert wird, dass am Anfang des Schneidvorganges das Schälmesser unter Beaufschlagung einer gegenüber einer im wesentlichen über den gesamten Schneidvorgang anliegenden Schneidandruckkraft verminderten Anlegekraft an dem stangenförmigen Schälgut anliegt. Vorteilhaft wird hierdurch bewirkt, dass das Anlegen des Schälmessers unter Bildung einer geringeren Andruckkraft bewirkt wird, während im weiteren Verlauf des Schneidvorganges eine höhere vorzugsweise an die Spargelkonsistenz angepasste Schneidandruckkraft anliegt. Grundgedanke der Erfindung ist es, das Anlegen des Schälmessers an das Schälgut unter einer verringerten Anlegekraft zu bewirken, so dass der Schneidvorgang mit einer verminderten und damit schonenden Andruckkraft eingeleitet wird. Dies wirkt sich insbesondere dann günstig aus, wenn der Schneidvorgang an einem Kopf des als Spargelstange ausgebildeten Schälgutes beginnt.

Nach einer besonderen Ausführungsform der Steuervorrichtung ist eine Verfahrenseinrichtung vorgesehen, mittels derer die schwimmend auf einem Träger gehalterten Verstellarme in Längsrichtung des stangenförmigen Schälgutes periodisch hin- und herbewegt werden. Dieser synchrone Verfahrweg der Verstellarme ist abgestimmt auf die öffnende und schließende Bewegung der Verstellarme quer zum stangenförmigen Schälgut. Die Abstimmung der im wesentlichen senkrecht zueinander verlaufenden Bewegungsrichtungen erfolgt derart, dass die Schälmesser bereits vor Erreichen eines Schälgutendes - und zwar entgegen der Schälrichtung - unter Beaufschlagen einer verminderten Anlegekraft an das Schälgut angelegt werden- Nachfolgend wird die Andruckkraft nach und nach erhöht, so dass bei Erreichen des Ende des Schälgutes die vorgegebene Schneidandruckkraft erreicht und der Schälvorgang in entgegengesetzter Richtung eingeleitet werden kann. Hierdurch wird bewirkt, dass das Schälmesser vor dem eigentlichen Beginn des Schälvorganges unter einer verminderten Andruckkraft an dem Schälgut anliegt, so dass eine relativ geringe Querkräftebeanspruchung des Schälgutes und damit eine geringe Druckbeanspruchung vorliegt. Vorteilhaft ist der Verlauf der Andruckkraft progressiv, so dass ein schlagartiges Andrücken der Schneidmesser an das Schälgut und ein damit unerwünschtes Schaffen von Eindrücken sowie eine Bruchgefahr des Schälgutes vermieden wird.

Nach einer bevorzugten Ausführungsform der Erfindung ist eine pneumatische oder elektropnaumatische Steuereinrichtung vorgesehen, mittels derer ein stetiges Ansteigen der Andruckkraft der Schälmesser in Querrichtung zu dem Schälgut bewirkt wird. Vorteilhaft umfasst die Steuereinrichtung mindestens ein Wegeventil und einen Druckspeicher, so dass die auf das Schälgut wirkende Andruckkraft nach Freischalten des Ventils nicht schlagartig, sondern kontinuierlich ansteigt. In der Anlegeposition des Schneidmessers kann durch Freischalten eines Bypasszweiges, der einen weiteren kleineren Druckspeicher umfasst, die Erhöhung der Andruckkraft zu der vorgegebenen Schneidandruckkraft bewirkt werden.

Zur Lösung der Aufgabe weist das erfindungsgemäße Verfahren die Merkmale des Patentanspruchs 6 auf.

Der besondere Vorteil des erfindungsgemäßen Verfahrens besteht darin, dass durch die verminderte Andruckkraft in der Anlegeposition des schälmessers an dem Schälgut eine schonendere Behandlung desselben bewirkt wird. Die auf das Schälgut am Anfang des Schälvorganges wirkende Querkräfte sind geringer.

Nach einer besonderen Ausführungsform des erfindungsgemäßen Verfahrens beginnt der Schneidvorgang erst mit Erreichen der vorgegebenen Schneidandruckkraft. Dabei befindet sich das Schneidmesser während einer entgegen der Schneidrichtung verlaufenden Bewegung des Schneidmessers zu dem Schälgut in der Anlegeposition. Nach Erreichen eines Ende des Schälgutes erfolgt eine Bewegungsumkehr in Schälrichtung, wobei nunmehr der Schälvorgang unter Angriff des Schälmessers entsprechend einer vorgegebenen Schneidandruckkraft vollzogen wird.

Vor Beginn des eigentlichen Schälvorganges, der vorzugsweise unter Anlage einer konstanten Schneidandruckkraft erfolgt, wird die Andruckkraft kontinuierlich erhöht, bis eine unmittelbare Anlage des Schneidmessers unter Bildung einer vorgegebenen Anlegekraft an dem Schälgut erfolgt. Die Höhe der Anlegekraft ist derart gewählt, dass keine Eindrücke in dem Schälgut entstehen. Während der Weiterbewegung des Schälmessers vorzugsweise entgegen der eigentlichen Schälrichtung entlang des Schälgutes erfolgt eine kontinuierliche Erhöhung der Andruckkraft, bis die Schneidandruckkraft erreicht ist. Die Ansteuerung des das Schälmesser tragenden Verstellarmes längs und quer zum Schälgut erfolgt derart, dass die Schneidandruckkraft am Ende des Schälgutes erreicht und der Schneidvorgang begonnen werden kann.

Nach einer alternativen Ausführungsform des erfindungsgemäßen Verfahrens kann die Höhe der Schneidandruckkraft auf die Form bzw. Konsistenz des Schälgutes abgestimmt sein. Bei härterem Schälgut kann die Schneidandruckkraft größer, bei weicherem Schälgut kann die Schneidandruckkraft geringer gewählt werden. Bei einem inhomogenen Schälgut kann die Schneidandruckkraft auch in Schälrichtung variabel eingestellt sein. Hierdurch kann eine weitgehende Anpassung des Schneidvorganges an die Erfordernisse des Schälgutes erzielt werden.

Ein Ausführungsbeispiel der Erfindung wird nachfolgend anhand der Zeichnungen näher erläutert.

Es zeigen:
- Figur 1: eine Seitenansicht einer Schälmaschine,
- Figur 2: ein Blockschaltbild einer Steuereinrichtung nach einem ersten Ausführungsbeispiel,
- Figur 3a: ein Paar von mit jeweils einem Schälmesser bestückten Verstellarmen in einer Öffnungsposition unterhalb einer Spargelstange in einem unteren Totpunkt eines zyklisch ablaufenden Schälvorganges,
- Figur 3b: das Paar von Verstellarmen in einer Anlegeposition an der Spargelstange unter Bildung einer relativ geringen Andruckkraft im Bereich einer Mitte des Schälhubes, Aufwärtshubes oder Leerhubes,
- Figur 3c: das Paar von Verstellarmen in einer Anlegeposition unter Bildung der Schneidandruckkraft im Bereich eines oberen Totpunktes des Schälhubes,
- Figur 3d: das Paar von Verstellarmen in der Schälposition, nachdem die Spargelstange entlang eines Schälhubes geschält worden ist, wobei sich die Verstellarme gerade unterhalb der Mitte des Schälhubes befinden,
- Figur 4: ein Kraft/Schälhub-Diagramm der Verstellarme bzw. der Schälmesser und
- Figur 5: ein Blockschaltbild einer Steuereinrichtung nach einer weiteren Ausführungsform.

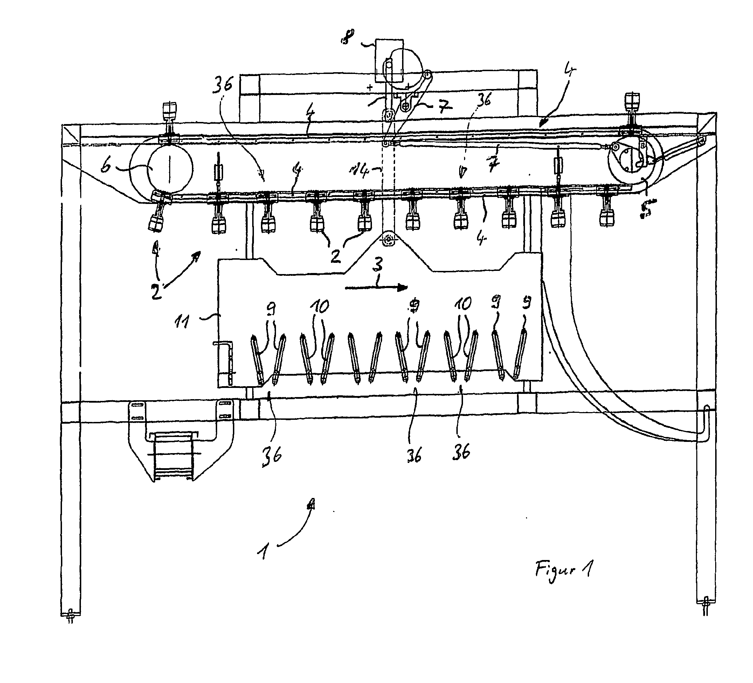

Eine Schälmaschine 1 gemäß Figur 1 dient im wesentlichen zum Schälen von Spargelstangen. Die Spargelstangen werden jeweils in einem tulpenförmigen Halteelement 2 gehalten und entlang einer geradlinigen Transportbahn in Richtung des Pfeils 3 geführt. Die Halteelemente 2 sind in einem vorgegebenen Abstand an einem Endlosriemen 4 befestigt, der umlaufbar um gegenüberliegende Rollen 5 und 6 geführt ist.

Die Rolle 5 wird mittels eines Gestänges 7 und einer Antriebseinheit 8 derart in Rotation versetzt, dass die in den Halteelementen 2 gelagerten Spargelstangen 13 taktweise in vorgegebene Schälstationen 36 bewegt werden, die entlang der Transportrichtung 3 angeordnet sind. Insgesamt sind gemäß der vorliegenden Schälmaschine 1 sechs Schälstationen 36 vorgesehen.

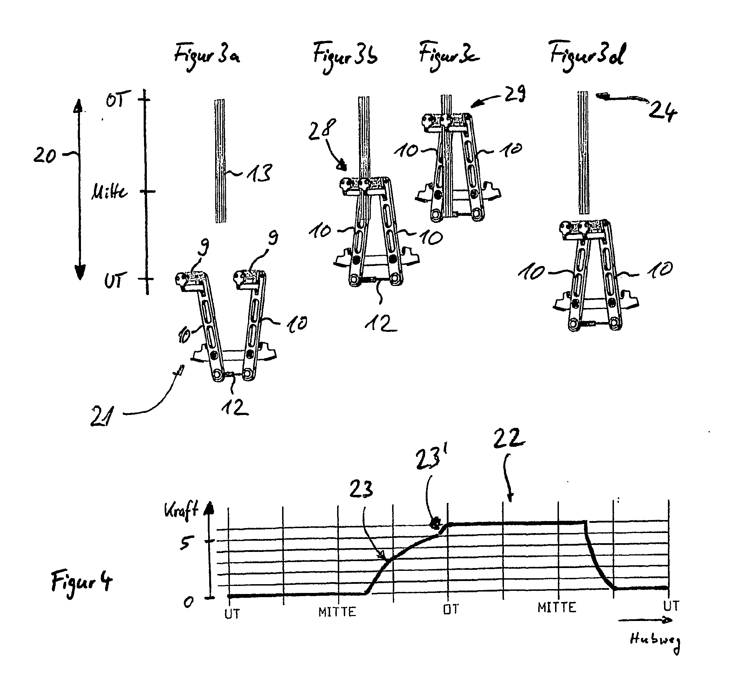

Bei der vorliegenden Schälmaschine 1 sind sechs Schälstationen 36 vorgesehen, denen jeweils ein Paar von Schälmessern 9 zugeordnet sind, die um 30° versetzt zueinander angeordnet sind. Die Schälmesser 9 sind jeweils an einem Ende eines Verstellarmes 10 befestigt, wobei die Verstellarme 10 jeweils gelenkig an einem gemeinsamen Trägerteil 11 gelagert sind. An einem dem Schälmesser 9 gegenüberliegenden Ende der paarweise angeordneten Verstellarme 10 ist ein Verstellelement 12 angeordnet, das die Verstellarme 10 von einer in Figur 3a dargestellten Öffnungsposition in eine in Figur 3b und Figur 3c dargestellten Anlegepositon bzw. Schälposition und vice versa verbringt. Die Verstellarme 10 sind schwimmend gelagert und werden durch das vorzugsweise als ein pneumatischer Zylinder ausgebildetes Verstellelement 12 zangenartig bzw. scherenartig oder parallel auseinander- und zueinanderbewegt. Die Bewegung der Schälmesser 9 erfolgt entlang eines Kreisbogens, wobei im wesentlichen die Anlage an Enden einer Spargelstange 13 in Querrichtung zur Längserstreckung derselben erfolgt, siehe Figur 3a bis 3d.

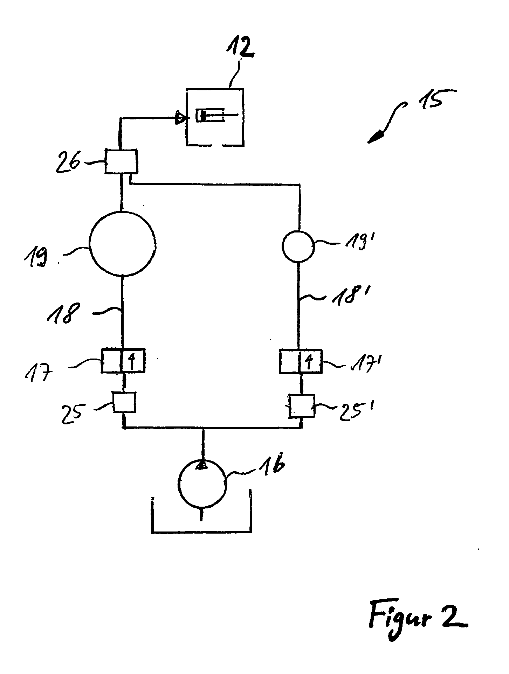

Die Auf- und Abbewegung des Trägerteils 11 erfolgt durch eine Verfahrenseinrichtung, die im wesentlichen durch ein Gestänge 14 und die mit demselben verbundene Antriebseinheit 8 gebildet ist. In Abstimmung mit der damit verbundenen Verstellung der Schälmesser 9 bzw. der Verstellarme 10 längs der Spargelstange 13 erfolgt die Öffnungs- bzw. Schließbewegung der Verstellarme 10 mittels einer in Figur 2 dargestellten Steuereinrichtung 15. Die Steuereinrichtung 15 besteht im wesentlichen aus einer Druckluftquelle (Kompressor) 16, mindestens jeweils einem dem Verstellarmpaar 10 zugeordnetes Wegeventil 17, 17' sowie jeweils den Verstellarmpaaren 10 zugeordnete Regler 25, 25', die jeweils in einer parallelen Zuführleitung 18, 18' zu dem Verstellelement 12 angeordnet sind. In jedem Zweig 18, 18' ist zusätzlich ein Druckspeicher 19, 19' angeordnet. Die beiden Zuführzweige 18, 18 werden zu einem weiteren Ventil 26 zusammengeführt, wobei das weitere Ventil 26 über eine einzige Zuführleitung mit dem Verstellelement 12 verbunden ist.

Die Öffnungs- und Schließbewegung des Paares von Verstellarmen 10 wird im Folgenden anhand der Figuren 3a bis 3d beschrieben. Die Verstellarme 10 bzw. die Schälmesser 9 befinden sich in einem unteren Totpunkt (UT) eines Schälhubes 20, der größer ist als die Länge der Spargelstange 13, in einer Öffnungsposition 21. Zum Beginn des Schälvorganges wird das Trägerteil 11 mittels der Verfahrenseinrichtung längs der Spargelstange 13 nach oben bewegt. Nach Überschreiten der Mitte des Schälhubes 20, siehe Figur 4, wird das Wegeventil 17 betätigt mit der Wirkung, dass der Verstellzylinders 12 ausfährt und die Verstellarme 10 sich in Richtung der Spargelstange 13 hinbewegen. Dadurch, dass sich in dem Zweig 18 ein Druckspeicher 19 befindet, wird der schlagartige Druckaufbau bei Betätigen des Vegeventils 17 nicht direkt und unmittelbar an den Verstellzylinder 12 weitergegeben. Vielmehr erfolgt ein Anstieg der mittels der Schälmesser 9 auf die Mantelfläche der Spargelstange 13 wirkenden Anlegekraft nach und nach (kontinuierlich), siehe Figur 4. Hierdurch ist die während der Bewegung entgegen der Schälrichtung anliegenden Anlegekraft 23 wesentlich geringer als die später nach Richtungsumkehr wirkende Schneidandruckkraft 22. Die Schälmesser 9 befinden sich nunmehr in einer Anlegeposition, in der sie mit einer gegenüber der Schneidandruckkraft 22 verminderten Anlegekraft 23, die nach und nach ansteigt, quer zur Spargelstange 13 andrükken. Die Anlegekraft 23 kann in einem Bereich von 10% bis 90% der späteren Schneidandruckkraft 22 liegen. Sie wird während der Aufwärtsbewegung entgegen der Schneidrichtung kontinuierlich, vorzugsweise progressiv wie in Figur 4 dargestellt, gesteigert.

Sobald die Schälmesser 9 einen Endbereich 24 der Spargelstange 13 erreicht haben, kann durch Zuschalten des zweiten Zuführzweiges 18' mittels Betätigung des Ventils 17' eine Erhöhung der Anlegekraft 23 unter Bildung eines stärkeren Anstieges erzielt werden. Im vorliegenden Ausführungsbeispiel ist in kleiner Drucksspeicher 19' vorgesehen, so dass der Kraftanstieg kontinuierlich erfolgt, siehe Abschnitt 23' in Figur 4.

Nachfolgend wird in einem oberen Totpunkt (OT) die maximale Schneidandruckkraft 22 erreicht und gleichzeitig durch Richtungsumkehr des Trägerteils 11 nunmehr eine Abwärtsbewegung eingeleitet. Mit der Abwärtsbewegung des Trägerteils 11 beginnt der Schälvorgang, wobei im wesentlichen eine konstante Schneidandruckkraft 22 über die gesamte Länge der Spargelstange 13 aufrechterhalten wird. Nachdem die Schälmesser 9 das gegenüberliegende untere Ende der Spargelstange 13 erreicht haben, siehe Figur 3d, werden die Wegeventile 17, 17' in Schließstellung gebracht, so dass mit dem noch vorliegenden Druck in den Druckspeichern 19, 19' die auf die Schälmesser 9 wirkende Kraft quer zu der Spargelstange 13 kontinuierlich abgebaut wird, bis in einem dem unteren Totpunkt (OT) des Schälhubes 20 nahen Bereich die Verstellarme 10 in die Öffnungsposition 21 zurückgekehrt sind.

Die Regler 25, 25' dienen zur Einstellung des entsprechenden Anlegedruckes bzw. Schäldruckes. Alternativ kann das Zusammenführen der Ventile 26 auch weggelassen werden. In diesem Fall liegt lediglich eine Zusammenführung des Anlegekraftzweiges 18 und des Bypasszweiges 18' vor.

Die Verfahrenseinrichtung ist derart ausgebildet, dass das Trägerteil 11 mit einer variierbaren Geschwindigkeit auf- und abbewegt wird. In der Figur 3b befinden sich die Schälmesser 9 in einer Anlegeposition 28, in der eine wesentlich geringere Andruckkraft auf die Spargelstange 13 ausgeübt wird als in der gemäß Figur 3c dargestellten Schälposition 29, in der die Schneidandruckkraft 22 anliegt.

Alternativ können die Schälmesser 9 auch erst in einem oberen Endbereich der Spargelstange 13 in die Anlegeposition 28 verbracht werden. Wesentlich ist, dass die Schälmesser 9 in der Anlegeposition 28 mit einer geringeren Anlegekraft 23 an der Spargelstange 13 anliegen und entgegen der Schälrichtung bewegt werden.

Nach einer weiteren Ausführungsform kann die Schneidandruckkraft 22 während des Schälvorganges variiert werden. In Abhängigkeit von der Konsistenz bzw. der Form der Spargelstange 13 kann die Schneidandruckkraft 22 erhöht oder verringert werden, so dass eine homogene und einheitliche Form der Spargelstange 13 nach dem Schälvorgang erzielt wird.

Dadurch, dass die Anlegekraft 23 geringer ist als die Schneidandruckkraft 22, erfolgt eine schonende Behandlung insbesondere des in dem Halteelement 2 eingesetzten Kopfes der Spargelstange 13.

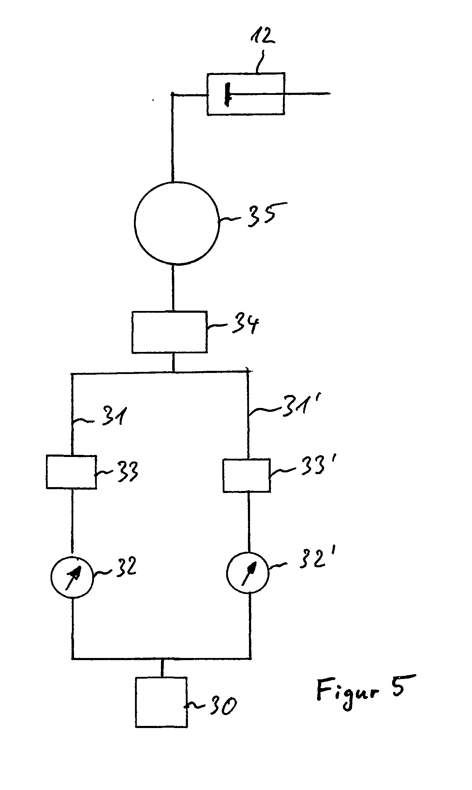

Nach einer alternativen Ausführungsform einer Steuereinrichtung gemäß Figur 5 dient als Druckluftquelle ein Kompressor 30, der zwei parallele pneumatische Zweige 31, 31' mit einem vorgegebenen Druck beaufschlagt. Jeder Zweig 31, 31' weist ein Stell- oder Regelelement 32, 32' sowie ein nachgelagertes Ventil 33, 33'. Mit den Stell- /Regelelementen 32, 32' läßt sich der Druck einstellen, der auf das zu betätigende Verstellelement 12 einwirkt. Nach Zusammenführung der Zweige 31, 31 in Stromabwärtsrichtung, die beispielsweise mittels eines weiteren Ventils 34 erfolgen kann, wird die Luft in einem Druckspeicher 35 geführt, bevor sie auf das Verstellelement 12 einwirken kann. Der Druckspeicher 35 hat die gleiche Aufgabe wie die Druckspeicher 19, 26 der Ausführungsform gemäß Figur 2. Im Unterschied dazu weisen die parallelen Zweige 31, 31' lediglich jeweils ein Ventil 33, 33' auf und zusätzlich jeweils einen Regler 32, 32'. Durch diese Regler 32, 32' kann der zu beaufschlagende Enddruck vorgegeben werden, der nach Verzögerung durch den Druckspeicher 35 an dem Verstellelement 12 anliegen soll. Dadurch, dass zwei Zweige 31, 31' vorliegen, kann mittels Betätigung der Ventile 33, 33' nacheinander jeweils ein schlagartiger Anstieg des Drucks bzw. der Kraft erzeugt werden. Falls zu mehr als zwei Zeitpunkten ein steiler Anstieg der Andruckkraft erzeugt werden soll, kann die Anzahl der Zweige beliebig erweitert werden. Durch Auslegung des Druckspeichers 35 kann die Steilheit der Andruckkraft vorgegeben werden. Falls diese zu vorgegebenen Zeitpunkten unterschiedlich sein sollte, ist eine Integration entsprechender Druckspeicher in die Parallelzweige gemäß Figur 2 vorzusehen. Die Ansteuerung des Verstellelementes 12 gemäß den Figuren 3a bis 3d sowie Figur 4 erfolgt nach der gemäß Figur 5 beschriebenen Steuereinrichtung.

## Patentansprüche

1. Steuervorrichtung zum Schälen von stangenförmigem Schälgut (13), insbesondere Spargel, mit mindestens zwei Schälmessern (9), die jeweils an einem verschwenkbaren Verstellarm (10) befestigt sind, mit einer pneumatischen Steuereinrichtung enthaltend eine Druckluftquelle (16) und ein pneumatisch betätigbares Verstellelement (12) verbunden sind, so dass die Schälmesser in eine unter Bildung einer Schneidandruckkraft an das Schälgut (13) anliegenden Schälposition und in eine das Schälgut (13) freigebenden Öffnungsposition bringbar sind, **dadurch gekennzeichnet, dass** die Steuereinrichtung (15) über Steuermittel verfügt, derart, dass das schälmesser (9) aus einer Anlegeposition, in der das Schälmesser (9) an dem Schälgut (13) anliegt, unter Bildung einer kontinuierlich ansteigenden Anlegekraft (23) in die Schälposition verbringbar ist, in der die Schneidandruckkraft (22) erreicht ist.

2. Steuervorrichtung nach Anspruch 1, **dadurch gekennzeichnet, dass** eine in Längsrichtung zum Schälgut verfahrbare Verfahrenseinrichtung vorgesehen ist, mittels derer die Schälmesser (9) periodisch in und entgegen der Schälrichtung hin- und herbewegbar sind, wobei vorzugsweise ein Paar von schwimmend gelagerten Schälmessern (9) scherenartig unter Bildung einer gegeneinander gerichteten Andruckkraft von der Öffnungsposition in die Schälposition über die Anlegeposition in die Schälposition und vice versa verbracht wird.

3. Steuervorrichtung nach Anspruch 1 oder 2, **dadurch gekennzeichnet, dass** das Steuermittel derart ausgebildet ist, dass die Schälmesser (9) im wesentlichen senkrecht zum Schälgut periodisch hin- und herbewegt werden, und dass die Beaufschlagung des Steuermittels in Bezug zu der Verfahrenseinrichtung abgestimmt ist, derart, dass die Schälmesser (9) zumindest stets in einem Endbereich des Schälgutes (13) unter Bildung der Anlegekraft angelegt werden.

4. Steuervorrichtung nach einem der Ansprüche 1 bis 3, **dadurch gekennzeichnet, dass** die Steuereinrichtung (15) als Steuermittel eine pneumatische oder elektropneumatische Steuerschaltung umfasst, mittels derer das Verstellelement (12) angesteuert wird, zur Erzielung der vorgegebenen Andruckkräfte.

5. Steuervorrichtung nach einem der Ansprüche 1 bis 4, **dadurch gekennzeichnet, dass** die Steuereinrichtung (15) als Steuermittel mindestens ein Wegeventil (17, 17') und einen Druckspeicher (19, 19') umfasst, wobei nach dem Verbringen des Wegeventils (17, 17') in die Durchflussstellung die Andruckkraft progressiv, erhöht wird.

6. Verfahren zum Schälen von stangenförmigem Schälgut (13), insbesondere von Spargel, wobei ein an einem Verstellarm befestigtes Schälmesser (9) mittels Betätigung eines mit dem Verstellarm (10) gekoppelten Verstellelementes (12) aus einer das Schälgut (13) freigebenden öffnungsposition in eine an das Schälgut (13) unter Bildung einer vorgegebenen Schneidandruckkraft anliegenden Schälposition verfahren wird, wobei das Schälmesser (9) unter Bildung einer gegenüber der Schneidandruckkraft (22) verringerten vorgegebenen Anlegekraft (23) in eine Anlegeposition an das Schälgut verbracht wird und die Andruckkraft des auf das Schälgut (13) wirkenden Schälmessers (9) in einer Schälposition auf die vorgegebene Schneidandruckkraft (22) erhöht wird zum Schälen des Schälgutes, **dadurch gekennzeichnet, dass** die Andruckkraft des Schälmessers (9) während der Bewegung des Schälmessers (9) zwischen der Anlegeposition und der Schälposition bis zum Erreichen der vorgegebenen Schneidandruckkraft (22) nach und nach erhöht wird.

7. Verfahren nach Anspruch 6, **dadurch gekennzeichnet, dass** das Schälmesser (9) in einem Endbereich des Schälgutes (13) mit der Anlegekraft (23) beaufschlagt wird.

8. Verfahren nach Anspruch 6 oder 7, **dadurch gekennzeichnet, dass** das Schälmesser (9) in einem Anfangsbereich und/oder in einem Endbereich des Schälvorganges mit der gegenüber der Schneidandruckkraft (22) verringerten Anlegekraft (23) beaufschlagt wird.

9. Verfahren nach einem der Ansprüche 6 bis 8, **dadurch gekennzeichnet, dass** der zeitliche Verlauf der Anlegekraft (23) und/oder der Schneidandruckkraft (22) in Abhängigkeit von der Form und/oder der Stärke des Schälgutes (13) eingestellt wird.

10. Verfahren nach einem der Ansprüche 6 bis 9, **dadurch gekennzeichnet, dass** das Schälmesser (9) im wesentlichen senkrecht zur Längserstreckung des Schälgutes (13) zwischen der Öffnungsposition (21) und der Schälposition (29) bewegt wird.

11. Verfahren nach einem der Ansprüche 6 bis 10, **dadurch gekennzeichnet, dass** das Schälmesser (9) entgegen der Schälrichtung unter Beaufschlagung der Anlegekraft (23) und Anlage an dem Schälgut (13) bewegt wird und dass nach Erreichen eines Endes des Schälgutes (13) die Bewegungsrichtung des Schälmessers (9) umgekehrt wird, wobei die Andruckkraft des Schälmessers (9) auf die vorgegebene Schneidandruckkraft (22) erhöht wird, so dass während des sich nun anschließenden Schälvorganges in Schälrichtung im wesentlichen die vorgegebene Schneidandruckkraft (22) aufrechterhalten wird.

## Claims

1. Control device for peeling elongated objects (13), in particular asparagus, having at least two peeling knives (9) each secured to a swivel type positioning arm (10) and connected to a pneumatic control unit which comprises a compressed air source (16) and a pneumatically operated psotioning element (12) such that while generating a cutting contact force the peeling knives may be brought into a peeling position in which they contact the object (13) to be peeled and into an opening position in which said object (13) is released, **characterized by** the fact that the control device (15) comprises control means adapted such that while generating a continuously increasing initial contact force (23) a peeling knife (9) may be moved from a contact position in which it contacts the object (13) to be peeled to a peeling position in which a predetermined cutting contact force (22) is reached.

2. Control device according to Claim 1, **characterized by** the fact that a shifting means movable in longitudinal direction relative to the object to be peeled is provided whereby the peeling knives (9) may be oscillated in or opposed to the peeling direction wherein preferably a pair of floatingly arranged peeling knives (9) is from an opening position via a contact position moved to a peeling position and vice versa in a scissor-like manner while an opposed contact force is being generated.

3. Control device according to Claim 1 or 2, **characterized by** the fact that that control means is such that the peeling knives (9) are periodically oscillated in a substantially vertical relation to the object to be peeled and that activation of the control means relative to a positioning device is tuned in such a way that the peeling knives are always brought into contact with an end portion at least of the object (13) to be peeled while said contact force is being generated.

4. control device according to any of the preceding Claims 1 to 3, **characterized by** the fact that the control device (15) comprises as a control means a pneumatic or electro-pneumatic control circuit arrangement by means of which the positioning element (12) is activated to obtain predetermined initial contact forces.

5. Control device according to any of the preceding Claims 1 to 4, **characterized by** the fact that the control device (15) comprises as a control means at least a directional valve (17, 17') and a pressure accumulator (19, 19') such that on adjusting said directional valve (17, 17') into its free-passage position the initial contact force is progressively being increased.

6. Method for peeling elongated objects (13), especially asparagus, wherein upon activation of the positioning element (12) coupled to a positioning arm (12) a peeling knife (9) attached to said arm is moved from an opening position in which the object (13) to be peeled is released to a peeling position in which said object (13) is held while a predetermined cutting contact force is built up, that while an initial contact force (23) lower than said cutting contact force (22) is being generated the peeling knife (9) is moved into an object contacting position and that said initial contact force of the peeling knife (9) acting on the object (13) while in peeling position is increased to a predetermined cutting contact force (22) for peeling the object, **characterized by** the fact that the initial contact force of the peeling knife (9) is gradually increased up to said predetermined cutting contact force while the peeling knife (9) is being moved from said contact position to said peeling position.

7. Method according to Claim 6, **characterized by** the fact that the initial contact force (23) is applied to the peeling knife (9) in an end portion of the object (13) to be peeled.

8. Method according to Claim 6 or 7, **characterized by** the fact that the initial contact force (23) which is lower than the cutting contact force (22) is applied to the peeling knife (9) in an initial or final phase of the peeling process.

9. Method according to any of the preceding Claims 6 to 8, **characterized by** the fact that the time for the initial contact force (23) and/or the cutting contact force (22) to build up is set as a function of the shape and/or the strength of the object (13) to be peeled.

10. Method according to any of the preceding Claims 6 to 9, **characterized by** the fact that movement of the peeling knife (9) between the opening position (21) and the peeling position (29) takes place in a substantially perpendicular relation to the longitudinal extension of the object (13) to be peeled.

11. Method according to any of the preceding claims 6 to 10, **characterized by** the fact that the peeling knife (9) is moved opposed to the peeling direction while the initial contact force (23) is being applied and while it contacts the object (13) to be peeled and that upon reaching the end of said object (13) the direction of movement of the peeling knife (9) is reversed whereby the initial contact force of the peeling knife (9) is increased to the predetermined cutting contact force level such that said predetermined cutting contact force (22) is substantially maintained in peeling direction during the peeling process that follows.

## Revendications

1. Dispositif pour éplucher un produit de forme allongée (13), en particulier des asperges, avec au moins deux couteaux à éplucher (9), qui sont fixés chacun à un bras d'ajustement (10) pivotant, et qui sont reliés à un dispositif de commande pneumatique comprenant une source d'air comprimé (16) et un élément d'ajustement (12), de sorte que lesdits couteaux à éplucher (9) puissent être amenés dans une position d'épluchage appliquée contre le produit à éplucher (13) par pression de coupe, et dans une position d'ouverture, libérant le produit (13),
**caractérisé en ce que**
le système de commande (15) dispose de moyens de commande de sorte que le couteau à éplucher (9) puisse être amené d'une position de contact, dans laquelle ledit couteau à éplucher (9) est appliqué contre le produit à éplucher (13) sous l'effet d'une force de contact (23) croissant en continu, à la position d'épluchage, dans laquelle la pression de coupe (22) est atteinte.

2. Dispositif de commande selon la revendication 1,
**caractérisé en ce qu'**est prévu un système de déplacement pouvant être conduit au produit à éplucher, dans la direction longitudinale, au moyen duquel les couteaux à éplucher (9) peuvent être déplacés périodiquement en va-et-vient dans la direction d'épluchage et inversement, une paire de couteaux à éplucher (9), montés flottants étant préférentiellement amenés, en ciseaux, sous l'effet de forces de pression opposées, de la position d'ouverture à la position d'épluchage en passant par la position de contact à la position d'épluchage et inversement.

3. Dispositif de commande selon revendication 1 ou 2, **caractérisé en ce que** le moyen de commande est conçu de sorte que les couteaux à éplucher (9) soient déplacés périodiquement, en va-et-vient, sensiblement perpendiculairement par rapport au produit à éplucher, et que l'actionnement dudit moyen de commande soit adapté au système de déplacement de sorte que les couteaux à éplucher (9) soient toujours appliqués au moins dans un région d'extrémité du produit à éplucher (13), sous l'effet de la force de contact.

4. Dispositif de commande selon l'une des revendications 1 à 3, **caractérisé en ce que** le système de commande (15) comprend, comme moyen de commande, un circuit de commande pneumatique ou électropneumatique au moyen duquel l'élément de déplacement (12) est excité pour l'obtention des forces de contact prédéterminées.

5. Dispositif de commande selon l'une des revendications 1 à 4, **caractérisé en ce que** le système de commande (15) comprend, comme moyen de commande, au moins une vanne de passage (17, 17') et un accumulateur de pression (19, 19'), la force de contact étant augmentée progressivement après que la vanne de passage (17, 17') ait été mise en position de passage.

6. Procédé pour éplucher un produit à éplucher (13) de forme allongée, en particulier des asperges, dans le cadre duquel un couteau à éplucher (9), fixé à un bras d'ajustement est conduit, par actionnement d'un élément d'ajustement (12), couplé audit bras d'ajustement (10), d'une position d'ouverture, libérant le produit à éplucher (13), à une position d'épluchage dans laquelle il est appliqué contre ledit produit à éplucher (13), sous l'effet d'une force de pression de coupe prédéterminée, le couteau à éplucher (9) étant amené dans une position de contact contre le produit à éplucher (13), sous l'effet d'une force de contact (23) réduite par rapport à la force de pression de coupe (22), et la force de pression de contact du couteau à éplucher (9), qui agit sur le produit à éplucher (13), montant, dans une position d'épluchage, jusqu'à la force de pression de coupe (22) prédéterminée pour l'épluchage du produit à éplucher,
**caractérisé en ce que**
la force de contact du couteau à éplucher (9) est augmentée progressivement, pendant le déplacement du couteau à éplucher (9) entre la position d'application et la position d'épluchage, jusqu'à ce que la pression de coupe (22) ait atteint la force prédéterminée.

7. Procédé selon la revendication 6, **caractérisé en ce que** le couteau à éplucher (9) est soumis à la force de contact (23) dans une région d'extrémité du produit à éplucher (13).

8. Procédé selon revendication 6 ou 7, **caractérisé en ce que** le couteau à éplucher (9) est soumis, dans une région d'extrémité avant et / ou dans une région d'extrémité arrière à la pression de contact (23) réduite par rapport à la pression de coupe (22).

9. Procédé selon l'une des revendications 6 à 8, **caractérisé en ce que** l'évolution dans le temps de la force de contact (23) et / ou de la force de coupe (22) est réglée en fonction de la forme et / ou de l'épaisseur du produit à éplucher (13).

10. Procédé selon l'une des revendications 6 à 9, **caractérisé en ce que** le couteau à éplucher (9) est déplacé, sensiblement perpendiculairement au sens de la longueur du produit à éplucher (13), entre la position d'ouverture (21) et la position d'épluchage (29).

11. Procédé selon l'une des revendications 6 à 10, **caractérisé en ce que** le couteau à éplucher (9) est déplacé à l'opposé de la direction d'épluchage en étant soumis à la force de contact (23) et en étant appliqué contre le produit à éplucher (13), et que le sens de déplacement du couteau à éplucher (9) est inversée quand une extrémité dudit produit à éplucher (13) a été atteinte, la force de la pression de contact du couteau à éplucher (9) montant à la force de pression de coupe prédéterminée (22) de sorte que, pendant le processus d'épluchage suivant, dans le sens d'épluchage, la force de la pression de coupe (22) prédéterminée est sensiblement maintenue.
